# FASCICULE DE BREVET EUROPEEN

(11) **EP 0 786 476 B1**
(45) Date de publication et mention de la délivrance du brevet: **23.05.2001**
(21) Numéro de dépôt: 97400123.2
(22) Date de dépôt: 21.01.1997
(51) Int. Cl.: C08B 31/00, C08B 31/16, D21H 17/29

(54) **Composition et procédé pour le collage de structures planes**
Zusammensetzung und Verfahren zur Leimung von flächigen Strukturen
Composition and process for bonding plane structures

(30) Priorité: 23.01.1996 FR 9600736
(43) Date de publication de la demande: 30.07.1997
(73) Titulaire: Roquette Frères, 62136 Lestrem (FR)
(72) Inventeur: Caboche, Jean-Jacques, 62131 Drouvin le Marais (FR)
(74) Mandataire: Boulinguiez, Didier

(56) Documents cités:
- EP-A- 0 620 315

## Description

L'invention a pour objet une nouvelle composition pour le collage de structures planes, en particulier du papier ou du carton. Les termes "papier" et "carton" désignent dans ce qui suit toute structure plane ou feuille, de dimensions, épaisseur et caractéristiques variables, non seulement à base de fibres cellulosiques - matière première la plus fréquemment utilisée dans l'industrie du papier et du carton - mais également à base :
- de fibres synthétiques telles que les fibres de polyamides, de polyesters et de résines polyacryliques,
- de fibres minérales telles que les fibres d'amiante, de céramique et de verre,
- de toutes combinaisons de fibres cellulosiques, synthétiques et minérales.

Par "structures planes" au sens de la présente invention, on entend également des structures telles que des feuilles ou films de nature non fibreuse et de dimensions, épaisseur et caractéristiques (résistance, souplesse) variables. Ces structures peuvent comprendre un composant organique (par exemple de nature polysaccharidique), synthétique (par exemple de nature polyoléfinique) ou minéral. Il peut s'agir, à titre indicatif, de films de polyéthylène destinés, entre autres, à l'impression jet d'encre.

Par "structures planes" au sens de la présente invention, on entend également des produits tels que des plaques à base de bois, de carton et/ou de papier, lesdites plaques présentant une composition, une structure, une épaisseur, des dimensions et des caractéristiques variables. De tels produits peuvent consister en des lattes de bois destinées à la confection de sommiers ou en des plaques à base de vieux papiers ou carton destinées à la fabrication de palettes repulpables.

La composition selon l'invention est applicable, entre autres, à toute structure plane (papier, film) pour impression et/ou écriture.

La présente invention vise également un nouveau procédé de collage de structures planes, notamment du papier, du carton ou de films, mettant en oeuvre ladite composition. Le terme "collage" doit ici être entendu comme comprenant aussi bien tout collage appliqué au sein de la totalité de la masse, fibreuse ou non, c'est-à-dire tout collage interne, ladite composition étant ainsi répartie dans la masse constitutive de la structure plane résultante, que tout collage externe (également appelé surfaçage, encollage ou enduction), ladite composition étant ainsi principalement ou totalement appliquée ou retenue au niveau de l'une, au moins, des deux faces de la structure plane résultante.

Il est connu que les opérations de collage, notamment de surfaçage, mettant en oeuvre des compositions polysaccharidiques à caractère hydrophobe permettent de conférer des propriétés améliorées aux structures planes telles que papiers, cartons et films, en particulier en termes de porosité, résistance à la pénétration de l'eau et des encres aqueuses.

La demande de brevet européen EP 350.668 décrit et revendique, en tant que composition de collage externe, une composition amylacée consistant en un mélange physique de 10 à 70 % (en poids) d'un amidon cationique non hydrophobe et de 30 à 90 % (en poids) d'un amidon hydrophobe non cationique de type particulier, en l'occurrence d'un monoester d'amidon obtenu par traitement au moyen d'un anhydride alcénylsuccinique. En fait, les exemples de ce document décrivent tous la mise en oeuvre, en tant qu'amidon hydrophobe, d'un amidon estérifié par l'anhydride 1-octénylsuccinique ("OSA"), anhydride dont le substituant hydrophobe est un alcène à chaîne linéaire (appelée également chaîne "normale" ou "n-") à 8 carbones.

Selon les enseignements de la demande de brevet subséquente EP 620.315, de tels mélanges physiques amidon cationique / amidon n-octénylsuccinylé constitueraient des compositions de collage externe efficaces mais poseraient des problèmes de mauvaise rétention au niveau des fibres, et donc de pollution, lorsque les papiers encollés obtenus sont repulpés et recyclés.

En suite de quoi, ladite demande de brevet EP 620.315 revendique l'utilisation, comme agents de collage interne ou externe, d'amidons substitués à la fois par des groupements cationiques et par des groupements n-alcénylsuccinylés.

On notera cependant que les exemples décrits dans la demande EP 620.315 :
- n'envisagent véritablement que le seul collage externe du papier, aucune description n'étant faite, en particulier, des améliorations éventuelles qui pourraient être obtenues de par le collage interne dudit papier au moyen de tels amidons cationiques disubstitués,
- n'envisagent véritablement que la seule mise en oeuvre d'amidons cationiques substitués par des groupements n-octénylsuccinylés, ceux-ci étant par ailleurs obligatoirement fluidifiés avant d'être estérifiés du fait de leur destination particulière (collage externe),
- ne comparent pas véritablement, notamment en termes de porosité, d'absorption d'eau et de qualité en impression jet d'encre (encre noire), les caractéristiques de papiers respectivement encollés par un mélange physique d'un amidon cationique et d'un amidon hydrophobe n-octénylsuccinylé et encollés par un amidon disubstitué (groupements cationiques + groupements n-octénylsuccinylés).

Il apparaît, en outre, que les amidons disubstitués spécifiquement préconisés au niveau de la demande EP 620.315 ne répondent pas totalement à l'ensemble des exigences actuelles de la pratique.

En particulier, de tels amidons cationiques uniquement substitués par des groupements linéaires alcénylsuccinylés ne permettent pas toujours d'atteindre, au niveau des produits finis, des caractéristiques de porosité et/ou d'imprimabilité totalement satisfaisantes compte tenu des cahiers des charges toujours plus contraignants imposés par le marché.

A titre d'exemples, les papetiers sont amenés, du fait des exigences toujours plus marquées de leur clientèle, à rechercher des moyens permettant d'abaisser encore la porosité de papiers de type "enveloppe" ou de type "impression" et des moyens aptes à améliorer encore l'imprimabilité de papiers destinés aux techniques d'impression dites "sans impact" (impression jet d'encre, laser, photocopie) et notamment d'impression jet d'encre couleur.

Ainsi, les fabricants d'enveloppes demandent à ce que le papier dont ils disposent présente une porosité très basse afin que les dispositifs industriels automatisés de manutention, de pliage et de tri, par exemple des dispositifs de type "ventouse aspirante", permettent, à chaque stade de la fabrication, une séparation individualisée et rapide de chacun des articles (enveloppes) finis ou en cours d'élaboration.

En outre, le fait d'abaisser la porosité des papiers permet aux papetiers de réduire la drasticité, et donc le coût énergétique, des opérations de raffinage et opérations subséquentes d'égouttage et par là-même, d'augmenter la vitesse machine et la productivité de leurs installations. Ces avantages s'accompagnent généralement d'un gain souhaité en rigidité du papier résultant.

Par ailleurs, le marché (activités industrielles, commerciales, publicitaires) est de plus en plus demandeur d'enveloppes présentant aussi une excellente imprimabilité et sur lesquelles peuvent être aisément imprimés, par exemple, des textes, slogans, logos ou autres signes distinctifs, de différentes couleurs.

Les vendeurs de papiers pour impression jet d'encre prêts à l'emploi et les fabricants d'imprimantes, imposent par ailleurs des cahiers des charges extrêmement rigoureux aux fabricants de papiers, lesdits papiers devant présenter des caractéristiques sans cesse améliorées, notamment en termes d'intensité de coloration, de résistance à la migration du (des) colorant(s) dans la profondeur, a fortiori, au verso, de la feuille, de netteté de contours, de résistance au phénomène de dégorgement ou de fusion des couleurs ("bleeding"), de brillance.

Une bonne intensité de coloration implique d'ailleurs que le papier pour impression jet d'encre présente, entre autres, une faible porosité assurant le maintien en surface du (des) colorant(s).

Or, il apparaît que les amidons disubstitués spécifiquement revendiqués dans la susdite demande EP 620.315, en particulier de type amidon cationique n-octénylsuccinylé, ne permettent pas d'atteindre les niveaux de porosité et/ou d'imprimabilité requis pour les papiers collés, notamment surfacés, les plus récemment développés sur le marché.

Il résulte de ce qui précède qu'il existait un besoin de trouver un moyen adapté aux exigences actuelles des techniques industrielles de préparation et de collage de structures planes, permettant notamment l'obtention de feuilles, films ou autres structures, fibreuses ou non, présentant des caractéristiques de porosité et/ou d'imprimabilité améliorées. De telles propriétés améliorées sont, entre autres, souhaitées pour les feuilles et films pour impression et/ou écriture.

Il est clair, par ailleurs, que d'un point de vue économique, un tel moyen se devait d'être applicable non seulement aux techniques de collage externe du papier, comme spécifiquement décrit dans la demande EP 620.315, mais également à une pluralité d'autres domaines d'application, en particulier pour le collage interne du papier et d'autres structures, planes ou non.

Et le mérite de la Société Demanderesse est d'avoir trouvé qu'un tel moyen pouvait être constitué par une composition contenant au moins un polysaccharide cationique n-alcénylsuccinylé, fluidifié ou non, ledit polysaccharide ayant par ailleurs subi une modification supplémentaire de nature anionique ou non ionique.

De façon plus précise, la présente invention a pour objet une composition pour le collage de structures planes, contenant un polysaccharide cationique n-alcénylsuccinylé, fluidifié ou non, caractérisée en ce que ledit polysaccharide présente une modification supplémentaire de nature anionique ou non ionique. De façon préférentielle, ladite composition est applicable au collage, interne et/ou externe, de structures planes, notamment du papier, du carton ou de films, destinées à l'impression et/ou écriture.

La modification supplémentaire, de nature anionique ou non ionique, présentée par le polysaccharide cationique n-alcénylsuccinylé contenu dans la composition de collage selon l'invention, peut tout particulièrement résulter de la mise en oeuvre de toute technique d'estérification, d'éthérification, de sulfonation ou de réticulation applicable à un polysaccharide.

Par technique d'estérification, on entend notamment tout procédé permettant de substituer un polysaccharide, en particulier un amidon, au moins en un endroit, par des groupements acétate, phosphate, succinate, sulfo-succinate, alcényl-succinate, maléate, sulfate, carboxyle, propionate, phtalate, borate ou nitrate.

Ces techniques incluent tout procédé d'oxydation, y compris d'oxydation non dégradative, permettant de substituer au moins un groupement OH du polysaccharide par un groupement COOH.

Par technique d'éthérification, on entend notamment tout procédé permettant de substituer un polysaccharide, en particulier un amidon, au moins en un endroit par des groupements alkylés, hydroxyalkylés, carboxyalkylés, cyanoalkylés, sulfoalkylés, phosphoalkylés.

Par technique de réticulation, on entend notamment tout procédé faisant réagir un polysaccharide, en particulier un amidon, par un agent tel que l'acide adipique ou l'un de ses dérivés, une halohydrine (par exemple l'épichlorhydrine), un trimétaphosphate (par exemple de sodium), l'oxychlorure de phosphore ou une résine (par exemple à base de formol).

En suite de quoi la présente invention a notamment pour objet une composition pour le collage de structures planes, contenant un polysaccharide cationique n-alcénylsuccinylé, fluidifié ou non, caractérisé en ce que ledit polysaccharide est un amidon cationique n-alcénylsuccinylé modifié par estérification, éthérification, sulfonation ou réticulation.

De façon avantageuse, le polysaccharide contenu dans la composition de collage selon l'invention consiste en un amidon cationique n-alcénylsuccinylé qui est, en outre, acétylé, hydroxyalkylé, phosphaté, sulfoné, succinylé, sulfo-succinylé ou réticulé.

Il convient d'insister à cet endroit de la description sur le fait que la préparation des polysaccharides utilisables selon l'invention, à savoir des produits cationiques n-alcénylsuccinylés et modifiés par des groupements anioniques ou non ioniques, peut être opérée selon une multitude de variantes.

De façon préférentielle mais non obligatoire, cette préparation envisage l'étape de cationisation du polysaccharide, en particulier de l'amidon, préalablement aux étapes de n-alcénylsuccinylation et de modification supplémentaire anionique ou non ionique.

D'un autre côté, les étapes de n-alcénylsuccinylation et de modification supplémentaire peuvent être menées dans un ordre indifférent, à savoir concomitamment ou subséquemment l'une à l'autre.

Cette multiplicité de procédés de préparation est particulièrement grande lorsque ladite modification supplémentaire consiste en une réaction d'estérification.

A titre purement indicatif, le procédé de préparation des polysaccharides utilisables selon l'invention, peut résulter :
- de la n-alcénylsuccinylation d'un polysaccharide préalablement cationisé et modifié par des groupements anioniques, en particulier d'un amidon amphotère présentant à la fois des groupements cationiques tels que des amines quaternaires et des groupements anioniques tels que des groupements de type sulfo-succinate, phosphate, succinate, sulfonate, sulfate ou carboxyalkylate.
- de la modification, par exemple par acétylation, hydroxypropylation, sulfonation ou réticulation d'un polysaccharide préalablement cationisé et n-alcénylsuccinylé.
- de la modification, par exemple par estérification (acétylation, succinylation ou autre) et par n-alcénylsuccinylation simultanées d'un polysaccharide préalablement cationisé.

Au sens de la présente invention, on entend par "polysaccharide" et ce, sans que cette liste ne soit limitative, les produits choisis dans le groupe comprenant les amidons et autres polymères de glucose ou polyglucanes, les gommes telles que par exemple les gommes guar, les celluloses et hémicelluloses, les polymères de fructose ou polyfructanes tels que par exemple l'inuline, les polymères du xylose ou polyxylanes et les mélanges quelconques d'au moins deux quelconques desdits produits.

Le polysaccharide peut notamment être constitué d'un amidon ou d'une gomme guar, de préférence d'un amidon.

Lesdits amidons, d'origine naturelle ou hybride, peuvent être à base de pomme de terre, de pomme de terre à haute teneur en amylopectine (fécule waxy), de maïs, de blé, de maïs à haute teneur en amylopectine (maïs waxy), de maïs à haute teneur en amylose, de riz, de pois ou de manioc, à base des coupes ou fractions qui peuvent en être faites ou obtenues telles que l'amylose, l'amylopectine, les coupes granulométriques connues de l'homme de l'art sous les vocables d'amidon de blé "A" et amidon de blé "B", et les mélanges quelconques d'au moins deux quelconques des produits susmentionnés, par exemple un mélange d'au moins un amidon de tubercule (fécule de pomme de terre notamment) et d'au moins un amidon de céréale (amidons de blé "A", blé "B", maïs, maïs waxy notamment).

L'étape de cationisation du polysaccharide, en particulier de l'amidon, peut être menée en milieu aqueux, en milieu solvant ou en phase sèche, de façon à permettre à un ou plusieurs groupement(s) azoté(s) de nature électropositive de se fixer sur le polysaccharide.

Lesdits groupements azotés peuvent notamment renfermer un atome d'azote tertiaire ou quaternaire comme les réactifs décrits dans les brevets suivants, déposés au nom de la Demanderesse :
- brevet FR 2.434.821, en particulier de la page 3, ligne 29 à la page 5, ligne 10,
- brevet EP 139.597, en particulier page 1, ligne 29 à page 2, ligne 6, et
- brevet EP 282.415, en particulier page 4, lignes 5 à 36, ces passages particuliers étant inclus à la présente description.

Les amidons cationiques utilisés dans le procédé selon l'invention peuvent notamment être préparés par l'une quelconque des techniques de cationisation, en particulier de cationisation en phase sèche, décrite dans les brevets FR 2.434.821, FR 2.477.159, EP 233.336, EP 303.039, EP 333.292, EP 406.837, US 4.332.935 et US 4.492.536.

Les amidons cationiques préférentiellement mis en oeuvre selon l'invention, qui présentent un niveau de cationisation non limitatif (par exemple un taux d'azote fixé de 0,04 à 3,0 % / poids sec d'amidon) peuvent d'ailleurs être de nature "polycationique" tels que ceux décrits dans les brevets EP 406.837 et US 4.492.536.

De préférence, dans le cadre de l'invention, on met en oeuvre des amidons cationiques présentant un taux d'azote fixé d'environ 0,05 % à environ 2,0 %, de préférence de 0,05 à 1,5 %, et plus préférentiellement encore de 0,09 % à 1,5 %, exprimé sur le poids sec de l'amidon.

Ils peuvent consister en des mélanges présentant des rapports pondéraux fécule de pomme de terre cationique / amidon de blé ou de maïs cationique allant d'environ 10/90 à environ 90/10, et notamment de 20/80 à 80/20, étant entendu que la cationisation peut avoir été opérée, comme décrit au niveau du brevet EP 139.597 au nom de la Demanderesse, sur le mélange des deux amidons ou, de façon séparée, sur chacun des deux amidons, lesquels sont ensuite mélangés.

Comme indiqué précédemment, l'opération de modification anionique ou non ionique du polysaccharide, appliquée en sus de la cationisation et de la n-alcénylsuccinylation, peut consister, entre autres :
a) en l'estérification anionique ou non ionique dudit polysaccharide par un agent d'estérification, ledit agent étant généralement mis en oeuvre à raison d'environ 0,1 à environ 20 %, en particulier de 0,2 à 10 %, exprimé en poids par rapport au poids sec de polysaccharide, notamment d'amidon, contenu dans le milieu réactionnel.
   Un agent d'estérification non ionique peut, entre autres, consister en l'anhydride acétique.
   Un agent d'estérification anionique peut, entre autres, consister en l'anhydride succinique.
b) en l'éthérification non ionique dudit polysaccharide par mise en oeuvre d'environ 0,1 à environ 20 % exprimé en poids par rapport au poids sec de polysaccharide, notamment d'amidon, contenu dans le milieu réactionnel, d'un agent tel que l'oxyde d'éthylène ou de propylène.
c) en la réticulation dudit polysaccharide par mise en oeuvre d'environ 0,001 à environ 5 %, exprimé en poids par rapport au poids sec de polysaccharide, notamment d'amidon, contenu dans le milieu réactionnel.
   Un agent de réticulation peut, entre autres, consister en l'acide adipique ou l'un quelconque de ses dérivés.
d) en la sulfonation dudit polysaccharide au niveau de liaisons insaturées portées par des groupements maléate ou alcénylsuccinate. Un agent de sulfonation peut, entre autres, consister en le bisulfite de sodium.

Comme indiqué précédemment, l'opération de modification anionique ou non ionique du polysaccharide appliquée en sus de la cationisation et de la n-alcénylsuccinylation conformément à la présente invention, peut être opérée postérieurement à la cationisation et antérieurement à la n-alcénylsuccinylation. Une telle modification peut consister, en particulier, en une estérification ou éthérification anionique d'un amidon préalablement cationisé, en suite de quoi ladite modification peut résulter en l'obtention d'un amidon amphotère ou "amphotérisation" et ce, avant l'étape de n-alcénylsuccinylation.

Selon une variante de la composition pour le collage de surfaces planes selon l'invention, le polysaccharide cationique n-alcénylsuccinylé contenu dans ladite composition est un amidon amphotère subséquemment n-alcénylsuccinylé.

La modification, par estérification ou éthérification anionique, d'un amidon cationique peut notamment être obtenue par la substitution dudit amidon par des groupements anioniques de type sulfo-succinate, phosphate, succinate, alkylsulfonate, sulfate ou alkylcarboxylate.

De tels substituants sont, entre autres, décrits au niveau du brevet EP 282.415 susmentionné.

L'étape de n-alcénylsuccinylation appliquée au polysaccharide, en particulier à l'amidon, contenu dans la composition pour le collage selon l'invention est, comme indiqué précédemment, préférentiellement réalisée après l'étape de cationisation dudit polysaccharide.

Ladite étape de n-alcénylsuccinylation peut se faire de manière connue en soi, par exemple par réaction de l'anhydride n-octénylsuccinique ("OSA") ou l'anhydride n-dodécénylsuccinique ("n-DDSA") sur un amidon de maïs préalablement cationisé par du chlorure de 3-chloro-2-(hydroxypropyl) triméthylammonium.

En suite de quoi l'amidon cationique n-alcénylsuccinylé ainsi obtenu peut, conformément à la présente invention, subir une modification supplémentaire de nature anionique ou non ionique telle que décrite ci-avant.

Comme indiqué précédemment, la Société Demanderesse a également trouvé que ladite étape de n-alcénylsuccinylation pouvait tout à fait être menée postérieurement ou simultanément à ladite étape de modification anionique ou non ionique, en particulier d'estérification anionique.

Comme il sera exemplifié par ailleurs, ladite étape de n-alcénylsuccinylation peut consister en la réaction d'un anhydride n-alcénylsuccinique comme l'OSA ou le n-DDSA sur un amidon cationique préalablement modifié par des groupements anioniques de type succinate ou alkylsulfonate, et donc sur un amidon amphotère.

D'une manière générale, et quelle que soit la nature de l'amidon sur lequel on réalise l'opération de n-alcénylsuccinylation, i.e un amidon uniquement cationique ou un amidon cationique déjà modifié, on met en oeuvre un lait d'amidon cationique ou cationique modifié (y compris amphotère) présentant une matière sèche (MS) d'environ 30 % à environ 40 %, une température d'environ 20°C à environ 50°C et un pH de l'ordre de 7,0-9,0. On ajoute au milieu d'environ 1 % à environ 10 % en poids par rapport au poids sec d'amidon contenu dans le lait amylacé, d'au moins un anhydride n-alcénylsuccinique. La réaction est menée pendant une durée d'environ 1 h à environ 24 h et ce, dans un milieu réactionnel dont les température et pH sont maintenus dans les gammes respectives précitées. La durée de réaction dépend, notamment, du taux d'anhydride mis en oeuvre et du niveau de n-alcénylsuccinylation souhaité. L'amidon cationique n-alcénylsuccinylé ou cationique modifié (y compris amphotère) n-alcénylsuccinylé obtenu est, après rectification du milieu à un pH de l'ordre de 4,0 à 8,0, lavé, séché puis éventuellement broyé.

Selon une variante de l'invention, l'amidon contenu dans la composition de collage consiste en un amidon cationique n-octénylsuccinylé ou n-dodécénylsuccinylé, modifié.

En outre, la Société Demanderesse a trouvé, notamment quand la composition de collage selon l'invention devait être utilisée pour le collage externe de structures planes, en particulier du papier, du carton ou de films, qu'il pouvait être avantageux, après cationisation (éventuellement également après modification anionique ou non ionique, notamment après amphotérisation) et, en tout cas avant n-alcénylsuccinylation, de fluidifier l'amidon cationique obtenu et ce, de telle sorte que celui-ci présente une fluidité dans l'eau ("water fluidity" ou "WF") d'environ 50 à environ 80. Une telle fluidification peut notamment résulter d'une hydrolyse chimique (en particulier, par mise en oeuvre d'un acide ou d'un agent oxydant), enzymatique et/ou thermique (en particulier par extrusion) du polysaccharide.

Selon une variante du procédé de préparation de la composition pour collage de structures planes selon l'invention, on met en oeuvre postérieurement aux étapes de cationisation, de n-alcénylsuccinylation et de modification anionique ou non ionique du polysaccharide, une étape supplémentaire d'adjonction d'un agent oxydant permettant, entre autres, lors de la cuisson ultérieure de la composition en vue de solubiliser le polysaccharide, d'atteindre la viscosité de colle souhaitée par le papetier, ladite viscosité pouvant en effet, dans certains cas, ne pas être totalement atteinte de par le seul traitement de cuisson ultérieur.

Par agent oxydant, on entend et ce, sans que cette liste ne soit limitative, un produit choisi dans le groupe comprenant les persulfates, les hypochlorites, les peroxydes, les perborates et les bromates, ledit agent oxydant consistant, de préférence, en un persulfate, en particulier du persulfate de sodium ou d'ammonium. De manière générale, lorsqu'il est mis en oeuvre, l'agent oxydant représente d'environ 0,05 % à environ 1,0 %, en particulier de 0,1 % à 0,5 %, en poids du polysaccharide contenu dans la composition.

Il convient de noter que l'étape éventuelle d'adjonction d'un agent oxydant, ladite étape étant généralement postérieure à l'ensemble des étapes de cationisation, de n-alcénylsuccinylation et de modification anionique ou non ionique , peut être opérée à tout moment avant, voire pendant, l'étape de cuisson de la composition pour collage.

A titre purement indicatif, cette adjonction peut avoir lieu aussi bien chez le fournisseur de la composition pour collage que chez le fabricant de papier, de carton ou de films. Dans ce dernier cas, l'agent oxydant peut être ajouté, en tout ou partie, avant et/ou pendant l'étape de cuisson.

La cuisson de ladite composition est réalisée de manière connue en soi, par cuisson discontinue, par exemple en cuve ouverte à des températures inférieures à 100°C, ou par cuisson continue, par exemple à des températures de 100 à 150°C dans un cuiseur continu sous pression ou "jet cooker", propre à assurer les opérations de dosage, de cuisson et de dilution. Selon notamment les caractéristiques de l'équipement de cuisson utilisé, la nature et la concentration de chacun des constituants de la composition pour collage, et la viscosité de colle recherchée par l'utilisateur, le temps de cuisson sera, en pratique, de l'ordre de quelques secondes à 20 mn environ.

La composition pour le collage de structures planes, en particulier du papier, du carton ou de films, selon l'invention peut contenir, outre au moins un polysaccharide cationique n-alcénylsuccinylé modifié, fluidifié ou non, l'un ou l'autre des produits communément utilisés pour le collage, interne et/ou externe (surfaçage), de feuilles, films ou autres structures planes, fibreuses ou non.

Ces produits incluent et ce, sans que cette liste ne soit limitative, les amidons et polyacrylamides non cationiques, les acides siliciques, poly-siliciques et dérivés, les pigments, les charges (en particulier les charges de faible granulométrie), les agents de collage (en particulier de type anhydride alcénylsuccinique ou dimère de cétène), les sels d'aluminium, les colorants, les azurants optiques, les lubrifiants et les agents anti-mousse.

De manière avantageuse, la composition pour le collage de structures planes selon l'invention contient un produit choisi parmi les agents de collage et les agents anti-mousse, lesdits agents étant d'origine naturelle ou synthétique et de nature ionique ou non ionique.

D'un autre côté, la composition pour collage de structures planes, en particulier du papier, du carton ou de films, selon l'invention peut être mise en oeuvre au moyen de toute technique connue de collage, en particulier de collage externe ou surfaçage. Ces techniques peuvent faire appel à des dispositifs de type presse à coller, cuve, applicateur à rouleau, calandreuse, coucheuse.

De telles techniques et tels dispositifs sont notamment décrit(e)s au niveau de la page 4, lignes 17-26 de la demande de brevet EP 350.668 susmentionnée.

On peut notamment utiliser la composition selon l'invention sur les dispositifs de collage les plus sophistiqués et performants disponibles sur le marché, en particulier sur ceux connus de l'homme de l'art sous les vocables de "size-press" et de "film-press".

La composition pour collage selon l'invention peut également être mise en oeuvre par toute technique connue de collage interne ou collage "en masse" de structures planes, en particulier du papier.

De telles techniques sont, entre autres, décrites au niveau des brevets FR 2.434.821, EP 139.597 et EP 282.415 susmentionnés, déposés au nom de la Demanderesse.

Ces techniques de collage "en masse" incluent notamment tout procédé associant, séparément ou au sein d'une même composition de collage interne, au moins un amidon cationique à au moins un polyacrylamide, un sel d'aluminium, un agent de collage, une charge et/ou un acide silicique ou polymère, poly-silicique ou dérivé.

De tels procédés sont notamment décrits au niveau des brevets US 4.066.495, FR 2.418.297, EP 41.056, EP 285.486, EP 285.487, EP 348.366, EP 490.425 et EP 522.940.

Dans le cadre de la présente invention, le polysaccharide cationique ou la composition pour collage selon l'invention, peut être introduite à n'importe quel endroit de la partie humide d'une machine à papier, y compris du pulpeur à la caisse de tête.

Dans le cadre de cette application particulière, de tels polysaccharides cationiques particuliers se sont également révélés significativement plus performants que des amidons cationiques n-alcénylsuccinylés "non modifiés".

Ces performances améliorées, tout à fait inattendues, se manifestent notamment par de meilleures rétentions et par des caractéristiques physiques augmentées au niveau du produit fini (feuilles de papier notamment).

D'une manière plus générale, la présente invention a également pour objet un procédé pour le collage interne de structures planes, en particulier du papier, caractérisé en ce que l'on met en oeuvre au sein de la masse constitutive desdites structures et au cours de leur formation, une composition de collage contenant un polysaccharide cationique n-alcénylsuccinylé présentant une modification supplémentaire de nature anionique ou non anionique, en particulier un amidon cationique n-alcénylsuccinylé estérifié, éthérifié, sulfoné ou réticulé, ledit polysaccharide étant, de préférence, non ou faiblement fluidifié.

En suite de quoi la présente invention a également pour objet un nouveau procédé pour le collage de structures planes, en particulier du papier, du carton ou de films, caractérisé en ce que l'on met en oeuvre, en tant que composition de collage, une composition contenant un polysaccharide cationique n-alcénylsuccinylé, fluidifié ou non, présentant une modification supplémentaire de nature anionique ou non ionique, en particulier un amidon cationique n-alcénylsuccinylé estérifié, éthérifié, sulfoné ou réticulé, fluidifié ou non. Ladite composition peut, dans le cadre dudit procédé, présenter l'une ou l'autre des caractéristiques évoquées précédemment.

A titre d'exemple, ce procédé peut, de manière générale, être très valablement appliqué au collage, en particulier au collage externe, de toute feuille ou tout film pour impression et/ou écriture.

Comme déjà indiqué et comme il résulte des exemples décrits ci-après, le procédé de collage selon l'invention peut avantageusement être appliqué au collage externe de papiers pour enveloppes et de papiers pour impression, en particulier pour impression sans impact et tout particulièrement pour impression jet d'encre.

Les polysaccharides cationiques n-alcénylsuccinylés particuliers, c'est-à-dire présentant une modification supplémentaire de nature anionique ou non ionique, utilisés dans la composition et le procédé pour collage de structures planes selon l'invention constituent des produits nouveaux, applicables industriellement, et présentant des propriétés surprenantes et inattendues.

En effet, la Société Demanderesse a notamment trouvé que ces polysaccharides cationiques n-alcénylsuccinylés particuliers étaient plus performants en collage externe que les polysaccharides cationiques n-alcénylsuccinylés "non modifiés" décrits dans la demande EP 620.315 précitée.

La meilleure efficacité, en collage externe, de ces polysaccharides cationiques n-alcénylsuccinylés modifiés est d'autant plus surprenante qu'elle est observable pour des produits modifiés dont la modification résulte en un apport de groupements anioniques sur la molécule polysaccharidique.

Or, l'homme de l'art aurait pu logiquement s'attendre à ce qu'un tel apport ionique diminue, peu ou prou, le caractère hydrophobe du polysaccharide n-alcénylsuccinylé et par là-même son efficacité en surfaçage.

En outre, la Société Demanderesse a également trouvé, comme indiqué ci-avant, que ces polysaccharides cationiques n-alcénylsuccinylés particuliers, notamment lorsqu'ils étaient peu ou non fluidifiés, pouvaient être valablement utilisés pour le collage interne du papier / carton.

La Société Demanderesse a également trouvé que de tels polysaccharides cationiques n-alcénylsuccinylés modifiés étaient utiles dans d'autres domaines d'application comme le couchage de structures planes, fibreuses ou non, la préparation d'adhésifs en général, de surfactants, d'agents émulsifiants, d'agents lubrifiants, d'agent hydrofugeants, d'agents floculants, d'agents viscosifiants, d'agents d'encapsulation, de matériaux thermoplastiques, de liants hydrauliques, d'agents adoucissants, d'agents de volume, de produits capillaires, de détergents ou d'apprêts textiles.

En suite de quoi la présente invention a également pour objet, en tant que produit nouveau, un polysaccharide cationique n-alcénylsuccinylé, fluidifié ou non, caractérisé en ce qu'il présente une modification supplémentaire de nature anionique ou non ionique.

Selon une variante préférentielle de l'invention, celle-ci a pour objet un amidon cationique n-alcénylsuccinylé, fluidifié ou non, modifié par estérification, éthérification, sulfonation ou réticulation, en particulier acétylé, hydroxyalkylé, phosphaté, sulfoné, succinylé, sulfo-succinylé ou réticulé.

Selon une autre variante, l'invention a pour objet un amidon cationique n-octénylsuccinylé ou n-dodécénylsuccinylé, fluidifié ou non, modifié par estérification, éthérification, sulfonation ou réticulation, en particulier acétylé, hydroxyalkylé, phosphaté, sulfoné, succinylé, sulfo-succinylé ou réticulé.

Les modalités de préparation et caractéristiques, générales ou préférentielles, de tels nouveaux produits ont été décrites précédemment.

L'invention pourra être encore mieux comprise à l'aide des exemples qui suivent et qui font état de certains modes - particulièrement avantageux de préparation et d'utilisation des polysaccharides cationiques et des compositions de collage selon l'invention.

### EXEMPLE 1

### PREPARATION DE POLYSACCHARIDES CATIONIQUES CONFORMES OU NON A L'INVENTION

Dans le cadre de cet exemple, on décrit la préparation de polysaccharides cationiques "témoins" non conformes à l'invention (PRODUITS T1 à T5) ainsi que la préparation de différents polysaccharides cationiques n-alcénylsuccinylés modifiés selon la présente invention (PRODUITS A à G).

### A) PRODUIT T1 (NON CONFORME A L'INVENTION)

### 1) Cationisation / fluidification

On prépare un lait d'amidon de maïs à 32 % de matière sèche (MS) présentant une température de 39°C environ, auquel on ajoute 2,4 % de chaux (ce pourcentage étant exprimé en poids sec de chaux/poids d'amidon) puis 3,8 % de chlorure de 3-chloro-2(hydroxypropyl)-triméthylammonium (exprimé en poids/poids d'amidon). Le pH de réaction est de 12,0 environ et la durée de réaction à 39°C de 11 heures environ. Le pH du milieu réactionnel est ensuite abaissé à une valeur de 3,0 environ par addition d'acide chlorhydrique (solution de HCl à 33 %) puis la température du milieu réactionnel est portée à 51°C environ.

On ajoute ensuite 0,8 % de HCl, exprimé en poids sec/poids d'amidon. On suit la fluidification de l'amidon cationique par mesure de la fluidité dans l'eau ("Water Fluidity" ou "WF") dudit amidon.

On arrête la fluidification quand l'amidon cationique ainsi fluidifié par hydrolyse acide présente une WF de l'ordre de 62-68 et ce, par mise en oeuvre de carbonate de sodium (Na₂CO₃) et obtention d'un pH de 4,5-5,5.

L'amidon cationique fluidifié ainsi obtenu est ensuite lavé. Son pH est ramené à la neutralité ou au-dessus. En dernier lieu, on sèche le produit de sorte que celui-ci contienne environ 13 % en poids d'eau.

Le polysaccharide cationique fluidifié obtenu présente un taux d'azote fixé de l'ordre de 0,21 % exprimé sur le poids sec d'amidon.

### 2) Estérification par l'anhydride n-octényl succinigue (OSA)

A partir du produit séché obtenu selon l'étape 1), on réalise un lait d'amidon cationique fluidifié à 32 % de MS et ce, à une température d'environ 30°C.

On ajoute de l'eau oxygénée (H₂O₂) jusqu'à ce que le milieu soit légèrement oxydant puis on ajuste le pH à 7,0 environ. On incorpore ensuite, en 3 heures, 3 % d'anhydride n-octénylsuccinique (OSA), ce pourcentage étant exprimé en poids/poids d'amidon, tout en maintenant le pH du milieu réactionnel à une valeur de 7,0 environ par addition de soude (NaOH).

On laisse réagir pendant 4 heures environ à ce même pH. On abaisse ensuite le pH du milieu à environ 6,5 (solution de HCl à 33 %). Le produit obtenu, à savoir un amidon cationique fluidifié substitué par 3 % en poids d'OSA, est ensuite lavé, essoré, séché sur lit fluidisé (teneur en eau d'environ 13 %).

Ce produit témoin (PRODUIT T1) correspond à un amidon cationique fluidifié n-octénylsuccinylé "non modifié" tel que décrit dans la demande de brevet EP 620.315.

### B) PRODUIT T2 (NON CONFORME A L'INVENTION)

Le protocole d'obtention du produit T2 est identique au protocole décrit pour le produit T1, si ce n'est que l'amidon a) est cationisé de façon à présenter un taux d'azote fixé de 0,12 % environ, b) est fluidifié de façon à présenter une WF de 55-62, et c) est estérifié par une chaîne carbonée linéaire à 12 atomes de carbone, en l'occurrence par l'anhydride n-dodécénylsuccinique ( ou "n-DDSA").

Ce produit témoin (PRODUIT T2) correspond donc à un amidon cationique fluidifié n-alcénylsuccinylé (en l'occurrence n-dodécénylsuccinylé) également "non modifié".

### C) PRODUIT T3 (NON CONFORME A L'INVENTION)

### 1) Cationisation

On prépare un lait de fécule de pomme de terre à 37,5 % de MS, présentant une température de 40°C environ, auquel on ajoute 4,82 % de chlorure de 3-chloro-2(hydroxypopryl)-triméthylammonium, puis 1,41 % de soude, les pourcentages étant exprimés en poids sec / poids d'amidon.

On laisse la réaction se poursuivre pendant 10 heures environ à 40°C, à la suite de quoi l'amidon cationique non fluidifié ainsi obtenu présente un taux d'azote fixé de l'ordre de 0,38 %, exprimé sur le poids sec d'amidon.

### 2) Modification par réticulation

Sur une fraction dudit amidon cationique non fluidifié obtenu, on ajoute, sans neutraliser le milieu réactionnel et à une température de 40°C environ, 10 ppm d'oxychlorure de phosphore (POCl₃).

Après une heure environ de contact, on neutralise le milieu réactionnel par HCL de façon à obtenir un pH de l'ordre de 5,0-6,0.

L'amidon cationique modifié, en l'occurrence réticulé, ainsi obtenu est ensuite lavé, essoré et séché.

Ce produit témoin (PRODUIT T3) correspond donc à un amidon cationique (non fluidifié) modifié mais non n-alcénylsuccinylé.

### D) PRODUIT T4 (NON CONFORME A L'INVENTION)

### 1) Cationisation

Le protocole de cationisation de ce produit est identique à celui du PRODUIT T3.

### 2) n-alcénylsuccinylation

Sur une fraction de la fécule cationique non fluidifié obtenue (azote fixé : environ 0,38 % amidon sec), on effectue une neutralisation à pH 8,0-8,5 par mise en oeuvre de HCl à 40°C environ.

On ajoute ensuite 10 ppm d'acide peracétique, exprimé en poids sec / poids d'amidon. On incorpore ensuite, en 1 heure 30 minutes, 1,2 % d'anhydride n-octénylsuccinique (OSA), ce pourcentage étant exprimé en poids / poids d'amidon, tout en maintenant le pH du milieu réactionnel à une valeur de 8,0-8,5 par addition de soude.

On laisse réagir à ce même pH et ce, jusqu'à stabilisation de la consommation de soude.

Après 1 heure, on abaisse le pH du milieu à environ 6,5 (solution de HCl à 33 %).

Le produit obtenu, à savoir un amidon cationique non fluidifié substitué par 1,2 % en poids d'OSA, est ensuite lavé, essoré et séché (teneur en eau d'environ 18 %).

Ce produit témoin (PRODUIT T4) correspond à un amidon cationique non fluidifié n-octénylsuccinylé "non modifié".

### E) PRODUIT T5 (NON CONFORME A L'INVENTION)

### 1) Cationisation

On prépare un lait de fécule de pomme de terre à 37,5 % de MS, présentant une température de 40°C environ auquel on ajoute 4,2 % de chlorure de 3-chloro-2(hydroxypropyl)-triméthylammonium puis 2,17 % de chaux, les pourcentages étant exprimés en poids sec / poids d'amidon.

On laisse la réaction se poursuivre pendant 10 heures environ à 40°C, à la suite de quoi le pH du milieu réactionnel est ramené à 5,0 environ par mise en oeuvre de HCl.

Le milieu réactionnel est alors refroidi à 25°C, puis on ajoute 0,01 % d'eau oxygénéeà 30 % et on ajuste le pH à 7,5 environ avec de la soude.

### 2) Modification par estérification anionigue (succinylation)

La fécule non fluidifiée cationique obtenue (azote fixé : environ 0,38 % / amidon sec) est additionnée de 1,4 % d'anhydride succinique, exprimé en poids sec / poids de fécule.

Cette adjonction se fait en 1 heure 30 minutes environ tout en maintenant le pH à 7,5 environ.

15 minutes après la fin de la mise en oeuvre de l'anhydride succinique, on rectifie le pH du milieu réactionnel à une valeur de 5,0 environ (mise en oeuvre de HCl).

L'amidon amphotère ainsi obtenu est ensuite lavé, essoré et séché.

Ce produit témoin (PRODUIT T5) correspond donc à un amidon cationique (non fluidifié) modifié, en l'occurrence estérifié par un substituant anionique et donc "amphotérisé", mais aucunement n-alcénylsuccinylé.

### F) PRODUIT A (AMIDON CATIONIQUE N-ALCENYLSUCCINYLE

### MODIFIE, CONFORME A L'INVENTION)

A partir du PRODUIT T1 (non conforme à l'invention), on réalise un lait à 37,5 % de MS et ce, à une température d'environ 20°C.

On ajoute de l'eau oxygénée H₂O₂ jusqu'à ce que le milieu soit légèrement oxydant puis on ajuste le pH à 8,0 environ par mise en oeuvre de soude.

On incorpore ensuite, en 20 minutes environ, un agent réticulant à base d'acide adipique, à un taux correspondant à 0,04 % exprimé en poids d'acide adipique / poids d'amidon, tout en maintenant le pH du milieu réactionnel à une valeur de 8,0 environ par addition de soude.

On laisse réagir pendant 30 minutes environ à ce même pH. On abaisse ensuite le pH du milieu à environ 5,5 (solution de HCl à 33 %).

Le produit obtenu est ensuite essoré et séché.

Ce produit (PRODUIT A) correspond à un amidon cationique (fluidifié) n-alcénylsuccinylé modifié, en l'occurrence un amidon cationique (fluidifié) n-octénylsuccinylé, réticulé, conforme à la présente invention.

### G) PRODUIT B (CONFORME A L'INVENTION)

Le procédé d'obtention du PRODUIT B est identique à celui du PRODUIT A si ce n'est que l'on met en oeuvre, en lieu et place de l'agent de réticulation, 1 % d'anhydride acétique, ce pourcentage étant exprimé en poids / poids d'amidon.

Dans le cas présent, l'agent de modification (c'est-à-dire l'anhydride acétique) est incorporé en 1 heure environ, en suite de quoi la réaction se poursuit pendant 30 minutes à pH 8,0 environ.

Le PRODUIT B obtenu après rectification du pH à 5,5 et essorage, correspond à un amidon cationique (fluidifié) n-alcénylsuccinylé modifié, en l'occurrence un amidon cationique (fluidifié) n-octénylsuccinylé acétylé, conforme à la présente invention.

### H) PRODUIT C (CONFORME A L'INVENTION)

Le procédé d'obtention du PRODUIT C est identique à celui du PRODUIT B si ce n'est que l'on met en oeuvre, en vue de la modification de l'amidon cationique fluidifié n-octénylsuccinylé, 3 % d'anhydride acétique, ce réactif étant introduit en 3 heures environ.

### I) PRODUIT D (CONFORME A L'INVENTION)

Le procédé d'obtention de PRODUIT D est identique à celui du PRODUIT B si ce n'est que l'on met en oeuvre, en vue de la modification de l'amidon cationique fluidifié n-octénylsuccinylé, 2,40 % de bisulfite de sodium exprimé en poids sec / poids d'amidon.

Cette introduction se fait rapidement, sans maintien de pH.

La réaction de sulfonation se déroule pendant 16 heures environ. Après ajustement du pH à 5,5 environ, le produit est essoré, remis en suspension à 30 % de MS puis séché à 14 % d'eau environ.

En dernier lieu, il est adjuvanté de 2 % de persulfate d'ammonium.

Le PRODUIT D obtenu correspond à un amidon cationique (fluidifié) n-alcénylsuccinylé modifié, en l'occurrence un amidon cationique (fluidifié) n-octénylsuccinylé sulfoné, conforme à l'invention.

### J) PRODUIT E (CONFORME A L'INVENTION)

### 1) Cationisation

On prépare un lait d'amidon de maïs à 37,5 % de MS, présentant une température de 40°C environ auquel on ajoute 5,0 % de sulfate de sodium, 1,89 % de chlorure de 3-chloro-2-hydroxypropyl-triméthylammonium, puis 1,50 % de soude, les pourcentages étant exprimés en poids sec / poids d'amidon.

### 2) Modification simultanée par hydroxypropylation

On ajoute ensuite au lait d'amidon, 2,0 % d'oxyde de propylène, ce pourcentage étant exprimé en poids sec / poids d'amidon. L'adjonction de l'agent de modification (oxyde de propylène) se fait en 2 heures environ.

On laisse se poursuivre la double réaction (cationisation et hydroxypropylation) pendant 20 heures environ à 40°C et à un pH de 12 environ.

Le pH du milieu réactionnel est ensuite abaissé à une valeur de 3,0 environ puis la température est portée à 51°C environ.

### 3) Fluidification et n-alcénylsuccinylation

La fluidification puis la n-alcénylsuccinylation sont conduites de la même façon que celle employée pour le PRODUIT T2.

Ce produit (PRODUIT E) correspond à un amidon cationique (fluidifié) n-alcénylsuccinylé modifié, en l'occurrence un amidon cationique (fluidifié) n-dodécénylsuccinylé hydroxypropylé, conforme à la présente invention.

### K) PRODUIT F (CONFORME A l'INVENTION)

Le procédé d'obtention du PRODUIT F est identique à celui du PRODUIT T3 (non conforme à l'invention) si ce n'est qu'après modification, en l'occurrence réticulation par POCl₃, l'amidon cationique réticulé obtenu est n-alcénylsuccinylé de la manière suivante.

Après neutralisation à pH 8,0-8,5 par HCl et adjonction de 10 ppm d'acide peracétique (exprimé en poids sec / poids d'amidon), on introduit en 90 minutes environ, 1,2 % d'anhydride n-octénylsuccinique (exprimé en poids sec/ poids d'amidon) dans le milieu réactionnel, lequel est maintenu à un pH de 8,0-8,5.

La réaction est poursuivie à ce même pH et ce, jusqu'à stabilisation de la consommation de soude.

Après 1 heure, on neutralise le milieu réactionnel à pH 6,0 environ (HCl) puis on lave et on sèche le produit ainsi obtenu.

Le PRODUIT F, lequel présente une teneur en eau de 18 % environ, correspond à un amidon cationique (non fluidifié) modifié, n-alcénylsuccinylé, en l'occurrence un amidon cationique (non fluidifié) réticulé, n-octénylsuccinylé, conforme à l'invention.

### L) PRODUIT G (CONFORME A L'INVENTION)

Le protocole d'obtention du PRODUIT G est identique à celui du PRODUIT T5 (non conforme à l'invention) si ce n'est qu'après cationisation et modification, en l'occurrence une amphotérisation par succinylation, l'amidon est n-alcénylsuccinylé.

Pour ce faire, on prépare à 25°C environ, un lait de PRODUIT T5 à 37,5 % de MS.

On ajoute ensuite 1,04 % de NaCl et 3,25 % de Ca Cl₂, exprimés en poids / poids d'amidon.

On ajoute ensuite 10 ppm d'acide peracétique, exprimé en poids sec / poids d'amidon.

La mise en oeuvre d'OSA (1,2 % en poids / poids d'amidon), la réaction de n-alcénylsuccinylation (pH 7,2-7,7) et les étapes ultérieures se font dans des conditions identiques à celles décrites pour le PRODUIT F, sauf pour le temps de contact lequel est porté à 4 h 30. Celui-ci correspond à un amidon cationique (non fluidifié) modifié, n-alcénylsuccinylé, en l'occurrence un amidon amphotère (non fluidifié) n-octénylsuccinylé, conforme à la présente invention.

### EXEMPLE 2

### PREPARATION DE COMPOSITIONS POUR LE COLLAGE EXTERNE (SURFACAGE) DU PAPIER

Dans le cadre de cet exemple, chacun des PRODUITS A à E (polysaccharides cationiques non fluidifiés, n-alcénylsuccinylés modifiés conformes à l'invention) et des PRODUITS T1 et T2 (polysaccharides cationiques, non fluidifiés, n-alcénylsuccinylés non modifiés), est mis sous forme de dispersion aqueuse présentant une matière sèche (MS) de l'ordre de 10,5-12 %.

Les dispersions obtenues sont ensuite soumises à un traitement thermique dans un cuiseur discontinu de type "cuve ouverte" et ce, pendant 15 minutes à 95-98°C, de façon à solubiliser l'amidon.

On obtient ainsi :
- à partir respectivement des PRODUITS A à E, les COMPOSITIONS A à E (compositions de collage selon l'invention), et
- à partir respectivement des PRODUITS T1 et T2, les COMPOSITIONS T1 et T2 (compositions de collage non conformes à l'invention).

On mesure, comme dans la demande de brevet EP 620.315, la viscosité BROOKFIELD à 60°C (vitesse : 100 tours/minute) de chacune des compositions de collage ainsi préparées.

Les compositions conformes à l'invention présentent les viscosités ci-après, exprimées en m Pa.s ou centipoises :
. COMPOSITION A : 120 m Pa.s
. COMPOSITION B : 180 m Pa.s
. COMPOSITION C : 180 m Pa.s
. COMPOSITION D : 85 m Pa.s
. COMPOSITION E : 125 m Pa.s

Les compositions non conformes à l'invention présentent les viscosités ci-après :
. COMPOSITION T1 : 96 m Pa.s
. COMPOSITION T2 : 135 m Pa.s

### EXEMPLE 3

### MISE EN OEUVRE DES COMPOSITIONS POUR LE COLLAGE DU PAPIER

Dans le cadre de cet exemple, on décrit les conditions de mise en oeuvre des compositions de collage, conformes ou non à l'invention, en vue du collage externe (ou surfaçage) du papier.

Le papier utilisé est un papier sans bois de type impression/écriture présentant un grammage de 78 g/m2, un taux de cendres de 24 % (450°C) et une porosité BENDTSEN de 1330 ml/minute. La dépose de chacune des compositions sur ledit papier se fait à un taux de l'ordre de 4 g/m2 et ce, par mise en oeuvre d'une coucheuse de laboratoire avec presse à coller ("size-press").

### EXEMPLE 4

### POROSITE DES PAPIERS OBTENUS AVEC LES COMPOSITIONS DE COLLAGE EXTERNE

On évalue la porosité des papiers surfacés obtenus et d'un papier "témoin" non surfacé au moyen d'un appareil d'essai BENDTSEN Modèle V avec indicateur direct de porosité.

La porosité est exprimée en ml d'air/minute, étant entendu que plus ce volume d'air est élevé plus la porosité du papier est importante et moins ledit papier est "fermé" et globalement applicable à l'impression et/ou l'écriture.

Le papier témoin, non collé, présente, comme indiqué ci-avant, une porosité BENDTSEN de 1330 ml/min.

Le même papier, surfacé respectivement par l'une ou l'autre des compositions selon l'invention A à E et non conformes à l'invention T1 à T2, présente la porosité ci-après :
. avec COMPOSITION A : 200 ml/min
. avec COMPOSITION B : 160 ml/min
. avec COMPOSITION C : 140 ml/min
. avec COMPOSITION D : 270 ml/min
. avec COMPOSITION E : 230 ml/min
. avec COMPOSITION T1 : 300 ml/min
. avec COMPOSITION T2 : 350 ml/min

Ces résultats montrent que les COMPOSITIONS A à E selon l'invention,lesquelles contiennent des amidons cationiques (fluidifiés) n-alcénylsuccinylés modifiés, permettent d'obtenir des porosités très significativement abaissées par rapport à celles obtenues avec les COMPOSITIONS T1 et T2 telles que revendiquées dans la demande EP 620.315 susmentionnée et qui contiennent des amidons cationiques (fluidifiés) n-alcénylsuccinylés non modifiés.

De telles performances des polysaccharides cationiques et compositions de collage selon l'invention illustrent parfaitement l'intérêt industriel que l'on peut en attendre dans le cadre de leur utilisation en vue d'abaisser la porosité de structures planes ou feuilles de type "carton", "papier", ou "film", en particulier de structures planes pour impression et/ou écriture tels que les papiers pour enveloppes ou films de polyéthylène.

Ces performances améliorées étaient d'autant plus insoupçonnables qu'elles sont, entre autres, obtenues avec des amidons cationiques n-alcénylsuccinylés, modifiés par des groupements anioniques (par exemple PRODUIT D) dont l'homme de l'art pouvait s'attendre à ce qu'ils diminuent l'efficacité des groupements anioniques hydrophobes que sont les substituants n-octényl ou n-dodécénylsuccinylés.

### EXEMPLE 5

### QUALITE D'IMPRESSION JET D'ENCRE COULEUR OBTENUE AVEC LES COMPOSITIONS DE COLLAGE

Dans le cadre de cet exemple, on évalue la qualité d'impression jet d'encre couleur des papiers surfacés obtenus après mise en oeuvre respectivement de chacune des compositions de collage A à E selon l'invention et T1 et T2 non conformes à l'invention.

Le test d'impression se fait sur une imprimante jet d'encre couleur de type "HP 560" commercialisée par HEWLETT PACKARD. Les papiers sont imprimés selon le programme informatisé du test IV intitulé "Paper Acceptance Criteria for HEWLETT PACKARD DESKJET 500 C".

Dans le cas présent, on évalue plus particulièrement le critère très sélectif de la qualité de l'impression rendue pour les couleurs noire et jaune et notamment le contraste et la netteté des contours des zones ainsi colorées et le degré de fusion éventuelle des colorants noir et jaune ("bleeding").

Cette évaluation permet de dresser le classement suivant des papiers surfacés et ce, par ordre décroissant de qualité d'impression jet d'encre couleur.
1 - papiers surfacés avec COMPOSITION A
2 - papiers surfacés avec COMPOSITIONS B ou D
3 - papiers surfacés avec COMPOSITIONS C ou E
4 - papier surfacé avec COMPOSITION T2
5 - papier surfacé avec COMPOSITION T1

Ces résultats montrent que les compositions de collage selon l'invention permettent généralement d'atteindre une qualité en impression jet d'encre couleur supérieure à celle obtenue avec les compositions préconisées par la demande de brevet EP 620.315 susmentionnée. Les compositions A à E selon l'invention se sont notamment toutes révélées, pour ce test d'impression, plus performantes que la COMPOSITION T2, laquelle contient le polysaccharide cationique n-alcénylsuccinylé non modifié (PRODUIT T2 = amidon cationique fluidifié n-octénylsuccinylé) plus particulièrement décrit dans la susdite demande.

### EXEMPLE 6

### PREPARATION ET MISE EN OEUVRE DES COMPOSITIONS POUR LE COLLAGE INTERNE (COLLAGE "EN MASSE") DU PAPIER

Dans le cadre de cet exemple, on décrit les conditions de préparation et de mise en oeuvre des compositions de collage, conformes ou non à l'invention, en vue du collage interne (ou collage "en masse") du papier.

On prépare une masse fibreuse contenant 50 % d'une pâte à la soude à base de fibres longues et 50 % d'une pâte à la soude à base de fibres courtes, à laquelle on ajoute de l'eau potable de sorte que la concentration de la pâte résultante soit de 5,90 g/l.

On y ajoute ensuite 35 % en poids de carbonate de calcium (CaCO₃) de sorte que la concentration de la pâte ainsi chargée se situe à environ 8,15 g/kg.

A partir de ladite pâte chargée, on reconstitue par dilution dans l'eau potable, une masse fibreuse présentant une concentration de 2,90 g/kg et un taux de cendres de 25,2 %.

Dans le cadre de cet exemple, on étudie les performances (taux de rétention en amidon et en charges, taux de rétention totale, cohésion interne) des PRODUITS E à G conformes à la présente invention (amidons cationiques n-alcénylsuccinylés modifiés) et des PRODUITS T3 à T5 non conformes à l'invention.

L'ensemble de ces amidons a été préparé sous forme de colles sur un appareil de cuisson en continu dans les conditions suivantes :
- lait à 10 % de matières sèches (MS),
- température de cuisson : 120°C,
- durée de cuisson : 20 secondes,
- dilution en ligne : 700 l/heure.

Ces compositions à base d'amidons cationiques n-alcénylsuccinylés, conformes ou non à l'invention, sont testées en tant qu'additifs "de masse", sur une "formette de rétention automatisée" TECHPAP.

La mise en oeuvre, pour ces tests, est réalisée à raison de 1,5 % d'amidon cationique sec par rapport à la teneur en matières sèches (MS) de la pâte.

Le temps de contact entre l'additif cationique et la pâte est de 5 minutes.

Pour chacune des colles à base des PRODUITS E à G selon l'invention et T3 à T5 non conformes à l'invention, on mesure les paramètres ci-après :
- taux de rétention d'amidon ou "RA" en %,
- taux de rétention totale ou "RT" en %,
- taux de rétention de charges ou "RC" en %, et
- cohésion interne des feuilles obtenues (selon test SCOTT-BOND) ou "CI" en joules/m² (J/m²).

Dans une première série d'essais, on compare les performances obtenues entre la composition de collage à base de PRODUIT F et celles à base, respectivement, des PRODUITS T3 et T4.

On obtient les résultats suivants :

| | PRODUIT F | PRODUIT T3 | PRODUIT T4 |
|---|---|---|---|
| RA (%) | 60,4 | 64,1 | 57,5 |
| RT (%) | 83,4 | 81,0 | 80,7 |
| RC (%) | 50,2 | 50,4 | 41,3 |
| CI (J/m²) | 355 | 317 | 283 |

Ces résultats montrent globalement qu'un amidon cationique n-alcénylsuccinylé modifié tel que le PRODUIT F, en l'occurrence un amidon cationique réticulé n-octénylsuccinylé, se révèle plus performant que le même amidon cationique n-alcénylsuccinylé non modifié (PRODUIT T4).

Si l'on tient compte des performances obtenues avec le PRODUIT T4, il apparaît, de façon surprenante et inattendue, que l'association de la n-alcénylsuccinylation et d'une modification par réticulation telle qu'envisagée ici, peut procurer des effets de synergie en termes de caractéristiques physiques du papier (indice "CI") et de rétention (notamment indices "RT" et "RC").

Dans le cadre d'une autre série d'essais, la Société Demanderesse a également constaté qu'une composition de collage à base de PRODUIT G, amidon cationique n-alcénylsuccinylé modifié par réticulation était globalement plus performante qu'une colle à base d'un amidon cationique n-alcénylsuccinylé non modifié, en l'occurrence le PRODUIT T5 et ce, en particulier en termes de rétention totale, et surtout de caractéristiques physiques.

### EXEMPLE 7

### PREPARATION ET MISE EN OEUVRE DES COMPOSITIONS POUR LE COLLAGE INTERNE (COLLAGE"EN MASSE") DU PAPIER

Les conditions de préparation et de mise en oeuvre des compositions de collage interne à base des PRODUITS E à G ou T3 à T5, sont identiques à celles décrites pour l'EXEMPLE 6 si ce n'est que dans le cas présent, chacun des additifs cationiques est introduit à raison de 1,0 % MS de la pâte et que le temps de contact additif cationique/pâte n'est que de 1 minute.

On obtient pour les compositions à base respectivement, des PRODUITS F, T3 et T4, les résultats suivants :

| | PRODUIT F | PRODUIT T3 | PRODUIT T4 |
|---|---|---|---|
| RA (%) | 60,3 | 67,5 | 63,1 |
| RT (%) | 85,5 | 83,1 | 83,1 |
| RC (%) | 62,1 | 54,0 | 49,8 |
| CI (J/m²) | 328 | 296 | 251 |

Les mêmes conclusions que celles faites pour l'EXEMPLE 6 peuvent être tirées en ce qui concerne les performances remarquables (notamment en termes de rétention totale, de rétention de charges, et de caractéristiques physiques) et l'intérêt, par ailleurs inattendu, de compositions pour collage à base de polysaccharides cationiques n-alcénylsuccinylés modifiés selon la présente invention.

### EXEMPLE 8

### UTILISATION D'UN POLYSACCHARIDE CATIONIQUE SELON L'INVENTION COMME AGENT EMULSIFIANT

Dans le cadre de cet exemple, on étudie les propriétés émulsifiantes d'un polysaccharide cationique n-alcénylsuccinylé modifié selon l'invention, en l'occurrence le PRODUIT F décrit au niveau de l'EXEMPLE 1.

Dans le cas présent, ces propriétés sont mises en valeur dans le domaine de la préparation d'émulsions d'agents de collage de type ASA (anhydride alcénylsuccinique), en particulier de l'agent de collage dénommé "FIBRAN 76".

La préparation des émulsions se fait de la façon suivante. On traite le PRODUIT F sur un appareil de cuisson en continu dans les conditions suivantes :
- lait à 10 % de MS,
- température de cuisson : 120°C,
- durée de cuisson : 20 secondes,
- absence de dilution,
- absence de pompe en sortie cuiseur.

A partir de ce traitement, on prépare une colle à 6 % de MS qui est maintenue à une température de 50°C environ.

A 100 g de ladite colle, soit 6 g d'amidon exprimé en sec, on ajoute 12 g de l'agent de collage "FIBRAN 76".

La composition de collage obtenue, laquelle présente un rapport pondéral amidon cationique sec/agent de collage de 0,5/1, est ensuite soumise à un traitement important de cisaillement, à savoir une homogénéisation 5 minutes à 20.000 tours/minute.

L'émulsion ainsi obtenue est ensuite mélangée sous agitation mécanique modérée avec de la colle de PRODUIT F diluée à 1 % MS, de façon à obtenir un rapport final amidon cationique / agent de collage de 3/1 environ.

La composition ainsi obtenue est ensuite diluée avec de l'eau de façon à obtenir une émulsion de "FIBRAN 76" à 0,3 % d'ASA, utilisable pour le collage interne du papier.

La composition fibreuse utilisée présente les caractéristiques suivantes :
- pâte à 50 % de fibres longues + 50 % de fibres courtes, chargée en CaCO3,
- concentration : 3,17 g/kg, et
- taux de cendres : 26,5 %.

Cette composition est testée, comme précédemment, sur une "formette de rétention automatisée" TECHPAP.

Le temps de contact entre cette composition de collage et la pâte est de 1 minute 30 secondes.

Pour cette composition, on étudie trois taux d'introduction au sein de la masse fibreuse, ces trois taux étant tels que la concentration en "FIBRAN 76" représente, respectivement, 0,17 (niveau 1), 0,20 (niveau 2) et 0,25 % (niveau 3) en poids/ MS de la pâte.

Pour chacun de ces trois taux, on mesure le taux de rétention de charges, le taux de rétention totale et, au niveau du produit fini (papier), le niveau d'absorption d'eau (selon test "COBB 60" largement connu et utilisé par l'homme de l'art).

Il apparaît globalement que le PRODUIT F selon l'invention permet la préparation et la mise en oeuvre aisées d'une composition de collage (y compris sous forme d'émulsion) à base d'un agent de collage de type ASA tel que le "FIBRAN 76".

En termes de rétention, une telle composition de collage à base de PRODUIT F et dudit agent de collage se révèle globalement, et toutes choses étant égales par ailleurs, supérieure à des compositions à base :
- d'un amidon uniquement cationique,
- d'un amidon cationique modifié mais non n-alcénylsuccinylé tel que le PRODUIT T3,
- d'un amidon cationique n-alcénylsuccinylé mais non modifié comme le PRODUIT T4.

En termes d'absorption d'eau du papier (celle-ci devant être la moins importante possible), le PRODUIT F démontre des performances globalement équivalentes au PRODUIT T4 et ce, malgré la modification anionique supplémentaire apportée au dit PRODUIT F devant, a priori, jouer négativement sur son hydrophobicité et donc sur sa capacité à "repousser" l'eau.

## Revendications

1. Polysaccharide cationique modifié par n-alcénylsuccinylation, fluidifié ou non, caractérisé par le fait qu'il présente une modification supplémentaire de nature anionique ou non ionique, ladite modification supplémentaire étant une estérification, une éthérification, une sulfonation ou une réticulation.

2. Polysaccharide selon la revendication 1, caractérisé par le fait que la modification supplémentaire de nature anionique ou non ionique est une acétylation, une hydroxyalkylation, une phosphatation, une succinylation ou une sulfo-succinylation.

3. Polysaccharide selon l'une ou l'autre des revendications 1 et 2, caractérisé par le fait que le polysaccharide cationique modifié par n-alcénylsuccinylation est un amidon cationique n-octénylsuccinylé ou n-dodécénylsuccinylé.

4. Polysaccharide selon l'une quelconque des revendications 1 à 3, caractérisé par le fait que le polysaccharide cationique a été modifié par n-alcénylsuccinylation après avoir subi une modification supplémentaire, de nature anionique.

5. Composition pour le collage de structures planes, caractérisée par le fait qu'elle contient un polysaccharide tel que défini dans l'une quelconque des revendications 1 à 4.

6. Composition selon la revendication 5, caractérisée en ce qu'elle contient, en outre, au moins un produit choisi dans le groupe comprenant les amidons et polyacrylamides non cationiques, les acides siliciques, poly-siliciques et leurs dérivés, les pigments, les charges, les agents de collage, les sels d'aluminium, les colorants, les azurants optiques, les lubrifiants et les agents anti-mousse, de préférence un produit choisi dans le groupe comprenant les agents de collage et les agents anti-mousse, de nature ionique ou non ionique et d'origine naturelle ou synthétique.

7. Procédé pour le collage de structures planes, en particulier du papier, du carton ou de films, caractérisé en ce que l'on met en oeuvre une composition de collage selon l'une quelconque des revendications 5 et 6.

8. Procédé pour le collage interne de structures planes, en particulier du papier, caractérisé en ce que l'on met en oeuvre au sein de la masse constitutive desdites structures et au cours de leur formation, une composition de collage selon l'une quelconque des revendications 5 et 6, le polysaccharide cationique n-alcénylsuccinylé modifié contenu dans ladite composition étant, de préférence, non ou faiblement fluidifié.

9. Procédé selon la revendication 7, caractérisé par le fait que les structures planes sont destinées à l'impression et/ou à l'écriture.

10. Utilisation d'un polysaccharide, en particulier d'un amidon, selon l'une quelconque des revendications 1 à 4, pour le collage, interne ou externe, de structures planes, fibreuses ou non, pour le couchage de structures planes, fibreuses ou non, pour la préparation d'adhésifs, de surfactants, d'agents émulsifiants, d'agents lubrifiants, d'agents hydrofugeants, d'agents floculants, d'agents viscosifiants, d'agents d'encapsulation, de matériaux thermoplastiques, de liants hydrauliques, d'agents adoucissants, d'agents de volume, de produits capillaires, de détergents ou d'apprêts textiles.

## Patentansprüche

1. Kationisches Polysaccharid, modifiziert durch n-Alkenyl-succinylierung, verflüssigt oder nicht, dadurch gekennzeichnet, daß es eine zusätzliche Modifizierung von anionischer oder nichtionischer Natur aufweist, wobei die genannte zusätzliche Modifizierung eine Veresterung, eine Veretherung, eine Sulfonierung oder eine Vernetzung ist.

2. Polysaccharid nach Anspruch 1, dadurch gekennzeichnet, daß die zusätzliche Modifizierung von anionischer oder nichtionischer Natur eine Acetylierung, eine Hydroxyalkylierung, eine Phosphatierung, eine Succinylierung oder eine Sulfo-succinylierung ist.

3. Polysaccharid nach dem einen oder anderen der Ansprüche 1 und 2, dadurch gekennzeichnet, daß das durch eine n-Alkenyl-succinylierung modifizierte kationische Polysaccharid eine n-octenylsuccinylierte oder n-dodecenyl-succinylierte kationische Stärke ist.

4. Polysaccharid nach irgendeinem der Ansprüche 1 bis 3, dadurch gekennzeichnet, daß das kationische Polysaccharid durch n-Alkenyl-succinylierung modifiziert wurde, nachdem es einer zusätzlichen Modifizierung anionischer Natur unterzogen wurde.

5. Zusammensetzung für das Leimen von flachen Strukturen, dadurch gekennzeichnet, daß sie ein wie in irgendeinem der Ansprüche 1 bis 4 definiertes Polysaccharid enthält.

6. Zusammensetzung nach Anspruch 5, dadurch gekennzeichnet, daß sie außerdem mindestens ein Produkt enthält, das aus der Gruppe ausgewählt wird, die umfaßt: die nicht kationischen Stärken und Polyacrylamide, die Kieselsäuren, Polykieselsäuren und ihre Derivate, die Pigmente, die Füllstoffe, die Leimungsmittel, die Aluminiumsalze, die Farbstoffe, die optischen Aufheller, die Schmiermittel und die Antischaummittel, vorzugsweise ein Produkt, ausgewählt aus der Gruppe, die umfaßt: die Leimungsmittel und die Antischaummittel ionischer oder nichtionischer Natur und natürlichen oder synthetischen Ursprungs.

7. Verfahren zum Leimen von flachen Strukturen, insbesondere von Papier, Karton oder Filmen, dadurch gekennzeichnet, daß man eine Zusammensetzung für das Leimen nach irgendeinem der Ansprüche 5 und 6 einsetzt.

8. Verfahren zum inneren Leimen von flachen Strukturen, insbesondere von Papier, dadurch gekennzeichnet, daß man in der Masse, aus der die genannten Strukturen bestehen und im Verlauf ihrer Bildung eine Zusammensetzung für das Leimen nach irgendeinem der Ansprüche 5 und 6 einsetzt, wobei das modifizierte, n-alkenylsuccinylierte kationische Polysaccharid in der genannten Zusammensetzung vorzugsweise in nicht verflüssigter oder gering verflüssigter Form vorliegt.

9. Verfahren nach Anspruch 7, dadurch gekennzeichnet, daß die flachen Strukturen für das Bedrucken und/oder das Beschriften vorgesehen sind.

10. Verwendung eines Polysaccharides, insbesondere einer Stärke nach irgendeinem der Ansprüche 1 bis 4 für das innere oder äußere Leimen von flachen, faserförmigen oder nicht faserförmigen Strukturen, für das Beschichten von flachen, faserförmigen oder nicht faserförmigen Strukturen, für die Herstellung von Haftmitteln, oberflächenaktiven Mitteln, Emulgatoren, Schmiermitteln, wasserabweisenden Mitteln, Flockungsmitteln, viskositätssteigernden Mitteln, Einkapselungsmitteln, thermoplastischen Materialien, hydraulischen Bindemitteln, reizlindernden Mitteln, Volumenmitteln, Kapillarprodukten, Detergenzien oder textilen Appreturen.

## Claims

1. Cationic polysaccharide which is modified by n-alkenylsuccinylation and which is fluidised or non-fluidised, characterised in that it has further modification of an anionic or non-ionic type, said further modification being esterification, etherification, sulphonation or crosslinking.

2. Polysaccharide according to claim 1, characterised in that the further modification of an anionic or non-ionic type is acetylation, hydroxyalkylation, phosphatisation, succinylation or sulphosuccinylation.

3. Polysaccharide according to any one of claims 1 or 2, characterised in that the cationic polysaccharide modified by n-alkenylsuccinylation is a cationic n-octenylsuccinylated or n-dodecenylsuccinylated starch.

4. Polysaccharide according to any of claims 1 to 3, characterised in that the cationic polysaccharide has been modified by n-alkenylsuccinylation after having been subjected to further modification of an anionic type.

5. Composition for sticking flat structures, characterised in that it contains a polysaccharide as defined in any of claims 1 to 4.

6. Composition according to claim 5, characterised in that it contains, moreover, at least one product selected from the group comprising non-cationic starches and polyacrylamides, silicic and polysilicic acids and their derivatives, pigments, fillers, adhesive agents, aluminium salts, colorants, optical blueing agents, lubricants and anti-foaming agents, preferably a product selected from the group comprising adhesive and anti-foaming agents, being ionic or non-ionic in type and of natural or synthetic origin.

7. Process for sticking flat structures, in particular made of paper, card or films, characterised in that an adhesive composition according to any of claims 5 and 6 is used.

8. Process for internally sticking flat structures, in particular made of paper, characterised in that an adhesive composition according to any of claims 5 and 6 is used within the mass constituting said structures and during the course of their formation, the modified n-alkenylsuccinylated cationic polysaccharide contained in said composition being, preferably non-fluidised or slightly fluidised.

9. Process according to claim 7, characterised in that the flat structures are intended for printing and/or writing.

10. Use of a polysaccharide, in particular a starch, according to any of claims 1 to 4, for internal or external sticking of fibrous or non-fibrous flat structures, for coating fibrous or non-fibrous flat structures, for preparing adhesives, surfactants, emulsifying agents, lubricating agents, waterproofing agents, flocculating agents, viscosifying agents, encapsulation agents, thermoplastic materials, hydraulic binders, softening agents, bulking agents, capillary products, detergents or textile finishes.
